Europäisches Patentamt

European Patent Office

Office européen des brevets

(19)

(11) Numéro de publication: **0 249 520**
**A1**

(12) **DEMANDE DE BREVET EUROPEEN**

(21) Numéro de dépôt: 87401179.4

(22) Date de dépôt: **25.05.87**

(51) Int. Cl.⁴: **C 22 B 58/00**
**C 22 B 41/00, C 22 B 3/00,**
**C 01 G 15/00, C 01 G 17/00**

(30) Priorité: **27.05.86 FR 8607525**

(43) Date de publication de la demande:
**16.12.87 Bulletin 87/51**

(84) Etats contractants désignés:
**AT BE CH DE ES FR GB GR IT LI LU NL SE**

(71) Demandeur: **SOCIETE MINIERE ET METALLURGIQUE DE PENARROYA Société anonyme dite:**
**Tour Maine-Montparnasse 33, avenue du Maine**
**F-75755 Paris Cédex 15 (FR)**

(72) Inventeur: **Decerle, Annie**
**23, rue Champ-Lagarde**
**F-78000 Versailles (FR)**

**Ricalens, François**
**4, square Alain-Fournier**
**F-75014 Paris (FR)**

(74) Mandataire: **Ricalens, François**
**Service de la Propriété Industrielle du Groupe IMETAL 1,**
**avenue Albert Einstein B.P. 106**
**F-78191 Trappes Cedex (FR)**

(54) Procédé de récupération de l'indium, du germanium et/ou du gallium au moyen de phases échangeuses d'ions à groupement phosphonique.

(57) L'invention a pour objet un procédé de récupération d'un métal choisi dans le groupe constitué par l'indium, le germanium et le gallium à partir d'une solution acide de ces métaux.

Ce procédé est caractérisé par le fait qu'il comporte les étapes suivantes :

a) mise en contact de ladite solution avec une phase échangeuse d'ions comportant au moins un groupement phosphonique

b) élution des métaux fixés sur la phase échangeuse d'ions.

EP 0 249 520 A1

**Description**

PROCÉDÉ DE RÉCUPÉRATION DE L'INDIUM, DU GERMANIUM ET/OU DU GALLIUM AU MOYEN DE PHASES ÉCHANGEUSES D'IONS À GROUPEMENT PHOSPHONIQUE

La présente invention a pour objet la récupération de métaux dissous dans une solution concentrée de sulfate de zinc. Elle concerne plus particulièrement la récupération de métaux choisis dans le groupe constitué par l'indium, le germanium et le gallium.

Au cours des deux derniers lustres, les utilisations des métaux appelés "petits métaux" tels que l'indium, le germanium et le gallium ont trouvé des applications de plus en plus nombreuses, notamment dans le domaine de l'électronique. De ce fait, ces métaux ont atteint des niveaux de prix relativement élevés et c'est la raison pour laquelle de nombreuses techniques ont été proposées pour leur récupération à partir de divers milieux.

Un certain nombre de ces métaux se trouve dans les minerais de zinc, plus particulièrement dans les blendes. C'est la raison pour laquelle c'est à partir de la métallurgie du zinc que la plupart des procédés ont été proposés.

En ce qui concerne l'indium et le germanium, deux techniques donnent satisfaction, pour le germanium celle utilisant l'extraction liquide-liquide utilisant les dérivés de l'hydroxy-8-quinoléine telle que décrite dans le brevet européen no OO46437 et pour l'indium celle utilisant l'extraction par résine à groupement D2EHPA telle que décrite dans le brevet français no 2.435.533.

Toutefois, il n'existe pas de technique satisfaisante permettant de récupérer le gallium dans ces milieux en raison notamment de la forte dilution du gallium et de la compétition de divers éléments et notamment le zinc, l'aluminium et des terres rares (e.g. gadolinium).

C'est pourquoi un des buts de la présente invention est de fournir un procédé de récupération du gallium à partir de solutions de sulfate de gallium diluées ou contenant des impuretés.

Un autre but de la présente invention est de récupérer simultanément au moins deux des métaux choisis dans le groupe constitué par l'indium, le germanium et le gallium.

Un autre but de la présente invention est de fournir un procédé qui permette une récupération des métaux ci-dessus à partir de solutions diluées, c'est-à-dire à des teneurs inférieures à 5OO mg/l et de préférence inférieures à 1OO mg/l.

Un autre but de la présente invention est de fournir un procédé qui permette l'abaissement de la teneur en les éléments ci-dessus inférieure à 1O, de préférence inférieure à 5 et avantageusement inférieure à 1 mg/l.

Un autre but de la présente invention est de fournir un procédé qui soit sélectif vis-à-vis d'éléments compétiteurs tels que les cations métalliques ou métalloïdiques susceptibles, dans le milieu envisagé, d'être trivalents tels que les cations ferriques ou arsénieux.

Un autre but de la présente invention est de fournir une solution enrichie en gallium permettant une récupération aisée du gallium telle que par exemple l'électrolyse en milieu basique.

Ces buts, ainsi que d'autres qui apparaîtront par la suite, sont atteints par un procédé de récupération d'un métal choisi dans le groupe constitué par l'indium, le germanium et le gallium à partir d'une solution acide de ces métaux, caractérisé par le fait qu'il comporte les étapes suivantes :
  a) mise en contact de ladite solution avec une phase échangeuse d'ions comportant au moins un groupement phosphonique
  b) élution des métaux fixés sur la phase échangeuse d'ions.

De préférence, le groupement phosphonique est un groupement diphosphonique ou amino-phosphonique. Les groupements donnant les meilleurs résultats sont les groupements méthylène-diphosphonique, amino-méthylène-phosphonique et de préférence les groupements hydroxy-diphosphoni ques.

La phase de contact peut être soit une phase liquide-liquide dans laquelle les composés liposolubles décrits dans la demande de brevet européen no 814OO633.4 sont dissous, soit une phase stationnaire comportant des groupements actifs. On peut notamment citer les résines hydroxy-diphosphoniques décrites dans la demande de brevet ci-dessus et la résine amino-phosphonique telle que celle vendue sous la dénomination commerciale ES 467 par la société DUOLITE. Cela peut être également une phase stationnaire imprégnée de molécules hydrophobes comportant ces groupements actifs.

La solution contenant les métaux spécifiés ci-dessus doit de préférence avoir une acidité comprise entre un pH égal à 5 et une concentration en ions hydrogène correspondant à une acidité de l'ordre de 5 N. De préférence, on choisit un domaine compris entre une acidité de $10^{-2}$ à 2 N.

Les anions de la solution sont de préférence des anions d'acide fort. Toutefois, le procédé présente surtout de l'intérêt pour les acides dont l'anion n'est que peu ou pas complexant tels que les acides nitrique, perchlorique et sulfurique.

L'étude qui a menée à la présente demande de brevet a démontré de manière surprenante que les résines phosphoniques étaient très sélectives vis-à-vis des différentes impuretés contenues dans les solutions provenant de la métallurgie en voie sulfurique du zinc, notamment les solutions provenant de la redissolution des oxydes du cubilot et celles venant du procédé qualifié de "Hot Strong Leaching".

Toutefois, le niveau de concentration de certaines impuretés doit être maintenu en deçà de certaines limites pour augmenter la charge de la phase organique. Parmi ces cations on peut citer notamment le fer ferrique et l'arsenic III.

La concentration en fer ferrique doit être de préférence maintenue en-dessous d'un gramme par litre et avantageusement en-dessous de 500 mg/l. L'extraction du fer ferrique peut être réalisée par réduction, notamment au moyen de blende, de gaz sulfureux et de ses dérivés et de tout réducteur ayant un potentiel redox approprié dans la solution en question.

En ce qui concerne l'arsenic, la teneur maximum à observer en ions arsenic III est de préférence inférieure à trois grammes par litre et avantageusement inférieure à un gramme par litre. L'arsenic III peut être éliminé par oxydation en arsenic V. Il peut être également éliminé par des méthodes connues en soi.

On s'aperçoit que pour éliminer ces deux éléments gênants il faut prendre des mesures contradictoires : réduction pour l'un, oxydation pour l'autre. Une solution réside dans l'oxydation totale de l'arsenic III en arsenic V. Cette oxydation permet de précipiter également du fer sous forme d'arséniate de fer dès lors qu'on a atteint le pH de précipitation de ce composé. On peut dans un deuxième temps réduire le fer résiduel à l'état ferreux. Les réactions d'oxydo-réduction sur l'arsenic sont suffisamment lentes pour que le retour de l'arsenic V vers l'arsenic III ne soit pas gênant.

La teneur en zinc peut être très élevée et atteindre la limite de solubilité de son sel. La présence de ce composé empêche toutefois d'augmenter le pH au-delà d'une valeur 1,5-2 où un début de précipitation intervient. La sélectivité vis-à-vis du zinc est tout à fait remarquable.

L'élution peut être réalisée en ce qui concerne l'indium au moyen d'un acide fort tel que l'acide chlorhydrique ou l'acide sulfurique. Il faut toutefois atteindre des concentrations élevées, supérieures à 5 N, pour obtenir une bonne élution ou bien utiliser des saumures de métaux alcalins, alcalino-terreux ou d'ammoniums.

L'élution du germanium peut avoir lieu à des pH supérieurs à 5. Il faut toutefois tenir compte de la solubilité du germanium dans le milieu.

Enfin, le gallium peut être élué en utilisant des solutions de base forte permettant le passage du gallium sous forme de gallate. Des solutions sodiques de pH 13 à 15,3 donnent satisfaction. On peut notamment utiliser des solutions de 1 à 5 N de soude ou de potasse. L'élution est suffisamment bonne pour que, avec recyclage si nécessaire, l'on puisse obtenir des teneurs en gallium supérieures à un gramme par litre, teneur qui permet une bonne électrolyse du gallium.

Une des manières de mettre en oeuvre l'invention pour récupérer le gallium consiste à réaliser la succession d'étapes suivantes : la solution gallifère est mise en contact avec la phase échangeuse d'ions, de préférence une résine hydroxy-diphosphonique ; la phase échangeuse d'ions est lavée deux fois, une première fois avec de l'acide sulfurique dilué, une deuxième fois avec de l'eau ; l'élution est réalisée au moyen d'hydroxyde de sodium 2 N ; la phase échangeuse d'ions est remise sous forme acide par contact avec une solution d'acide diluée, par exemple de l'acide sulfurique, et la phase est prête à subir un nouveau cycle de récupération du gallium.

Une utilisation des résines phosphoniques selon le présent procédé est également attractive lors de la récupération du gallium à partir de différentes sources, dès lors que le gallium et/ou l'indium et le germanium sont en solution acide, de préférence des solutions dont les anions des acides ne sont pas complexants comme décrit précédemment. De telles solutions se recontrent lors de la purification du gallium extrait des solutions d'aluminate de sodium (liqueurs Bayer) et contre-extrait avec un acide chlorhydrique relativement dilué, avec un acide sulfurique ou avec un mélange des deux. Dans ce cas, la fixation du gallium est bonne surtout lorsque les ions chlorure sont peu concentrés (teneur inférieure à 3 N, avantageusement inférieure à 1 N, de préférence inférieure à 0,1 N). De telles solutions peuvent également être rencontrées lors de la mise en solution de différents composés contenant du gallium tels que les composés III-V gallifères (AsGa, GaP, ...) ou des composés du type grenat (grenat de gadolinium-gallium ou GGG). Il est à noter que lors de cette dissolution, qui peut être réalisée par des moyens connus en soi, d'autres métaux, notamment l'indium, le germanium, le gadolinium, peuvent être dissous.

Le procédé selon l'invention permet de séparer le gallium d'avec le gadolinium, notamment lors de l'élution basique où le gallium (très amphotère) forme facilement des anions et est solubilisé en milieu basique cependant que le gadolinium en forme beaucoup moins.

Lorsque l'on fixe les trois métaux (indium, germanium, gallium), il est possible d'éluer sélectivement le gallium et le germanium de l'indium lorsqu'il reste insolubilisé sur la résine en milieu basique mais peut être élué par de l'acide chlorhydrique concentré (supérieur à 2 N, avantageusement supérieur à 5 N, de préférence aux alentours de 8 N). L'acide chlorhydrique peut être partiellement remplacé par un mélange d'acide minéral fort (HCl, $H_2SO_4$, ...) et d'ions chlorure introduits sous forme de sels alcalins, alcalino-terreux ou équivalents (par équivalent on entend les chlorures fortement dissociés), à condition que la concentration en ions chlorure respecte les contraintes indiquées par l'acide chlorhydrique ci-dessus et que l'acidité de l'éluant soit au moins égale à 1 N, avantageusement supérieure à 2 N.

Lorsque le gadolinium est présent en forte quantité, on peut utiliser la technique connue en soi de précipitation des sulfates mixtes alcalins de gadolinium afin d'abaisser la teneur en ce métal par addition de sulfate alcalin ou utiliser une précipitation également connue en elle-même à l'aide de l'acide oxalique ou de ses sels.

Les exemples qui suivent et qui ne présentent aucun caractère limitatif ont pour but de mettre les spécialistes à même de déterminer aisément les conditions opératoires qu'il convient d'utiliser dans chaque cas particulier.

Exemple 1

Etude comparative de fixation du gallium contenu dans une solution de sulfate de zinc industriel par diffé rentes résines

Les résines testées sont :
- une résine méthylène-hydroxy-diphosphonique, ci-après désignée par HDP
- une résine amino-phosphonique vendue par DUOLITE sous la dénomination ES 467
- une résine imprégnée de phosphate de tributyle produite par BAYER sous la dénomination d'OC 1023.
Composition de la solution de sulfate de zinc :

Zn : 100 g/l
Ge : 209 mg/l
Fe : 1,6 g/l
As : 5,3 g/l
Mn : 100 mg/l
Sb : 100 mg/l
Mg : 10 g/l
Ca : 0,5 g/l.

Le gallium est dopé dans cette solution pour atteindre 20,6 mg/l. Le fer ferrique est réduit par de l'acide ascorbique à raison de 1,5 QS (quantité stoechiométrique calculée pour passer à l'acide déshydroascorbique). Le pH est de 0,5. Les contacts sont effectués en ampoule à décanter avec un volume de résine sur un volume de solution de 1/20. Température ambiante.

Dans ces conditions, la résine HDP fixe mieux le gallium que les autres mais présente une moins bonne sélectivité vis-à-vis du germanium.

Les résultats sont rassemblés dans le tableau suivant.

| Temps de contact (mn) | Résine HDP | | Amino-phosphonique | | Imprégnée TBP OC 1023 | |
|---|---|---|---|---|---|---|
| | Ga | Ge | Ga | Ge | Ga | Ge |
| 5 | 24,8 | 20,6 | 16,5 | 11,0 | 6,8 | 3,3 |
| 10 | 33,0 | 24,9 | 21,4 | 13,9 | 8,2 | 2,9 |
| 15 | 38,8 | 33,5 | 25,2 | 13,4 | 7,3 | 3,8 |
| 30 | 45,6 | 38,3 | 26,2 | 15,8 | 9,7 | 2,9 |
| 60 | 51,9 | 41,1 | 33,0 | 17,7 | 9,7 | 3,3 |
| | Rendement d'extraction (%) | | | | | |

Des résines de groupements actifs amide-oxime, ammonium et amino-diacétique ne donnent aucun résultat significatif de fixation.

Les résultats en fixation de TBP ne sont pas non plus significatifs.

Un essai réalisé sur la même solution sur un lit de résine avec un débit de 4 bv/h conduit à la fixation de 1,7 g/l de gallium et de 1,2 g/l de germanium. Lorsque l'on supprime le germanium (abaissement à une teneur de 0,6 mg/l, on atteint une capacité de 2 g/l.

Exemple 2

Influence du $Fe^{3+}$ en présence de zinc et de germanium
Une solution synthétique de composition :
Zn = 100 g/l
Ga = 20 mg/l
Ge = 200 mg/l

Fe total = 1,5 g/l
$Fe^{3+}$ = variable

est soumise à un contact avec une résine échangeuse d'ions HDP avec un rapport O/A de 1/2O dans les mêmes conditions que précédemment.

Les fixations au bout d'une heure sont rassemblées dans le tableau suivant :

| $Fe^{3+}$ (mg/l) | Rendement d'extration (%) | |
|---|---|---|
| | Ga | Ge |
| 0 | 76,5 | 32,25 |
| 20 | 70,6 | 39,6 |
| 50 | 58,9 | 38,5 |
| 250 | 42,9 | 28,3 |
| 500 | 33,2 | 28,4 |
| 800 | 28,6 | 25,8 |
| 1 000 | 28,50 | 21,8 |

## Exemple 3

Elution du gallium

5 ml de résine chargée en gallium sont mis en contact avec 5O ml de solution d'élution pendant une heure à température ambiante.

Le type de solution d'élution et les résultats obtenus sont rassemblés dans le tableau suivant :

| Solution d'élution | Ga g par litre de résine | Temps de contact en mn | Ga mg/l | Ga mg dans 50 ml | Rendement d'élution % |
|---|---|---|---|---|---|
| NaOH 2 N | 0,63 3,15 mg/ 5 ml | 5 15 60 | 26,9 49,4 52,6 | 1,34 2,47 2,63 | 42,5 78,4 83,5 |
| NaOH 4 N | " | 5 15 60 | 36,7 47,0 49,7 | 1,83 2,35 2,48 | 58,1 74,6 78,7 |
| $H_2SO_4$ 2 N | 1,71 8,55 mg/ 5 ml | 5 15 60 | 11,7 15,3 18,3 | 0,58 0,76 0,91 | 6,8 8,9 10,6 |
| $H_2SO_4$ 5 N | " | 5 15 60 | 17,9 34,8 50,1 | 0,89 1,74 2,50 | 10,4 20,3 29,2 |
| $(NH_4)_2CO_3$ | 0,56 2,82 mg/ 5 ml | 5 15 60 | 0,2 0,1 0,1 | 0,01 0,005 0,005 | 0,3 0,2 0,26 |
| NaCl 250 g/l HCl 0,8 N | " | 5 15 60 | 2,0 2,5 3,7 | 0,10 0,12 0,18 | 3,5 4,2 6,4 |

Exemple 4

Un éluat sulfurique provenant de la dissolution d'un solvant à groupement actif hydroxy-8-quinoléine, lequel solvant a été chargé par contact avec une solution d'aluminate de sodium Bayer industrielle, est percolé à une vitesse de 15 bv/h sur la résine amino-phosphonique vendue sous la dénomination commerciale ES 467.

Cet éluat, dont l'acidité est égale à 3 N, contient comme éléments principaux du gallium (475 mg/l), de l'aluminium (535 mg/l) ainsi que des impuretés mineures communes à ce type d'éluat.

Des analyses sont faites à intervalles réguliers en sortie de colonne et permettent de calculer par différence la fixation du gallium. Ces analyses sont résumées dans la tableau ci-après.

| Rang du bv | Ga mg/l | Al mg/l | Quantité Ga fixé sur résine mg/l | Quantité Al fixé sur résine mg/l |
|---|---|---|---|---|
| S.I. | 475 | 535 | | |
| 5 | 81 | 300 | 2 009,4 | 1 198,5 |
| 10 | 275 | 530 | 3 069,4 | 1 225 |
| 15 | 365 | 535 | 3 608,4 | |
| 20 | 390 | | 4 007,9 | |
| 30 | 405 | | 4 707,9 | |
| 40 | 440 | | 5 145,4 | |

Ces résultats montrent une très bonne sélectivité du gallium par rapport à l'aluminium puisque l'aluminium n'est fixé qu'au début du cycle et atteint très vite une saturation. Il est d'ailleurs probable, mais la précision des analyses ne permet pas de trancher, que l'aluminium est relargué au moins partiellement par déplacement au profit du gallium.

Exemple 5

Des solutions synthétiques de gallium et de gadolinium dans des milieux aqueux différents ont été réalisées puis ont été mises en contact en ampoules à décanter et sous agitation avec la résine amino-phosphonique vendue sous la dénomination commerciale ES 467.

La fixation au cours du temps est sommairement suivie et les résultats de ces essais sont résumés dans le tableau suivant.

|  | HCl 4 N | | HCl 8 N | | H$_2$SO$_4$ 8 N | |
|---|---|---|---|---|---|---|
|  | Ga | Gd | Ga | Gd | Ga | Gd |
| Solution initiale en g/l | 0,913 | 0,84 | 0,905 | 0,81 | 1,01 | 0,74 |
| Solution après 120 mn en g/l | 0,663 | 0,6 | 0,505 | 0,29 | 0,775 | 0,53 |
| % de métal fixé | 27,4 | 28,6 | 44,2 | 64,2 | 23,3 | 28,4 |

Ces résultats montrent que la fixation du gallium et du gadolinium est assez voisine dans chaque milieu. La fixation relativement élevée malgré une forte acidité en milieu chlorhydrique 8 N paraît surtout pour le gallium être reliée à une fixation anionique sur le site amino de la résine amino-phosphonique.

**Revendications**

1. Procédé de récupération d'un métal choisi dans le groupe constitué par l'indium, le germanium et le gallium à partir d'une solution acide de ces métaux, caractérisé par le fait qu'il comporte les étapes suivantes :
   a) mise en contact de ladite solution avec une phase échangeuse d'ions comportant au moins un groupement phosphonique
   b) élution des métaux fixés sur la phase échangeuse d'ions.

2. Procédé selon la revendication 1, caractérisé par le fait que le groupement phosphonique est choisi dans le groupe constitué par les groupements diphosphonique ou amino-phosphonique.

3. Procédé selon la revendication 1, caractérisé par le fait que l'étape b) de dissolution des métaux fixés est réalisée, pour le germanium et le gallium, par des solutions alcalines dont le pH est compris entre 13 et 15,3.

4. Procédé selon les revendications 1 à 3 prises séparément, caractérisé par le fait que l'élution de l'indium est réalisée par une solution d'acide chlorhydrique supérieur à 2 N.

5. Procédé selon les revendications 1 à 4 prises séparément, caractérisé par le fait qu'il comporte une étape de mise en solution de déchets gallifères du type III-V ou du type grenat au moyen d'un acide minéral fort et par le fait que l'on traite cette solution selon lesdites étapes a) et b).

6. Procédé selon les revendications 1 à 5 prises séparément, caractérisé par le fait que ladite solution acide de ces métaux provient de la contre-extraction d'agents ayant fixé du gallium contenu dans les solutions d'aluminate de sodium.

7. Procédé selon la revendication 5, caractérisé par le fait que lorsque du gadolinium est présent dans la solution il est préalablement précipité sous forme de sulfate mixte alcalin par addition de sulfate alcalin.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 148 158  (SUMITOMO CHEMICAL CO., LTD) * Revendications * | 1-4 | C 22 B  58/00 <br> C 22 B  41/00 <br> C 22 B   3/00 <br> C 01 G  15/00 <br> C 01 G  17/00 |
| X | CHEMICAL ABSTRACTS, vol. 75, 1971, page 340, résumé no. 54068v, Columbus, Ohio, US; T.A. CHERNOVA et al.: "Complexing of gallium(III) and copper(II) ions with hydroxyethylidenediphosphonic acid", & ZH. FIZ. KHIM. 1971, 45(5), 1114-16 * En entier * | 1,2 | |
| A,D | EP-A-0 038 764  (MINEMET RECHERCHE) | | |
| A,D | EP-A-0 008 992  (SOCIETE MINIERE ET METALLURGIQUE DE PENARROYA) | | DOMAINES TECHNIQUES RECHERCHES (Int. Cl.4) <br><br> C 22 B <br> C 01 G |
| A | EP-A-0 106 117  (HOECHST AG) | | |
| A | EP-A-0 023 173  (SOCIETE NATIONALE ELF AQUITAINE) | | |
| | ---              -/- | | |

Le présent rapport de recherche a été établi pour toutes les revendications

| Lieu de la recherche <br> LA HAYE | Date d'achèvement de la recherche <br> 17-09-1987 | Examinateur <br> JACOBS J.J.E.G. |
|---|---|---|

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 98, 1983, page 433, résumé no. 150393t, Columbus, Ohio, US; I.I. SEIFULLINA et al.: "Complexing of germanium(IV) with hydroxyethylenediphosphonic acid in aqueous solutions", & KOORD. KHIM. 1983, 9(1), 67-70 | | |
| A | CHEMICAL ABSTRACTS, vol. 68, 1968, page 671, résumé no. 6882q, Columbus, Ohio, US; N.M. DYATLOVA et al.: "Masking capacity of complexons containing alkylphosphonic acid groups", & TR., VSES. NAUCH.-ISSLED. INST. KHIM. REAKTIVOV OSOBO CHIST. KHIM. VESHCHESTV. 29, 209-12(1966) | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 17-09-1987 | JACOBS J.J.E.G. |